# EUROPÄISCHE PATENTANMELDUNG

(11) **EP 3 599 046 A1**
(43) Veröffentlichungstag der Anmeldung: **29.01.2020**
(21) Anmeldenummer: 18186019.8
(22) Anmeldetag: 27.07.2018
(51) Int. Cl.: B23K 9/09, B23K 9/095, B23K 9/10, B23K 9/173

(54) **LICHTBOGENSCHWEISSVERFAHREN MIT EINEM ABSCHMELZENDEN SCHWEISSDRAHT**

(71) Anmelder: FRONIUS INTERNATIONAL GmbH, 4643 Pettenbach (AT)
(72) Erfinder: SÖLLINGER, Dominik, 4643 Pettenbach (AT); ARTELSMAIR, Josef, 4643 Pettenbach (AT); MAYER, Manuel, 4643 Pettenbach (AT)
(74) Vertreter: Sonn & Partner Patentanwälte

(57) **Zusammenfassung**

Die Erfindung betrifft ein Lichtbogenschweißverfahren mit einem abschmelzenden Schweißdraht, wobei während eines Schweißprozesses in aufeinanderfolgenden Schweißzyklen (SZ) der Schweißdraht mit einem bestimmten Schweißstrom (I(t)) beaufschlagt und mit einer bestimmten Drahtvorschubgeschwindigkeit in Richtung eines zu bearbeitenden Werkstücks bewegt wird. Zur weiteren Verbesserung der Stabilität des Schweißverfahrens ist vorgesehen, dass bei einem Wechsel des Schweißprozesses mit einer erhöhten mittleren Drahtvorschubgeschwindigkeit während eines Schweißzyklus (SZ) und bzw. oder einem erhöhten mittleren Schweißstrom während eines Schweißzyklus (SZ) eine Absenkphase (AP) eingeleitet wird, wobei in der Absenkphase (AP) der Schweißstrom (I_{A}(t)) über eine vorgegebene Dauer (Δt_{A}) abgesenkt wird.

## Beschreibung

Die Erfindung betrifft ein Lichtbogenschweißverfahren mit einem abschmelzenden Schweißdraht, wobei während eines Schweißprozesses in aufeinanderfolgenden Schweißzyklen der Schweißdraht mit einem bestimmten Schweißstrom beaufschlagt und mit einer bestimmten Drahtvorschubgeschwindigkeit in Richtung eines zu bearbeitenden Werkstücks bewegt wird.

Bei Lichtbogenschweißverfahren mit abschmelzendem Schweißdraht, wie z.B. MIG (Metall-Inertgas)-Schweißverfahren oder MAG (Metall-Aktivgas)-Schweißverfahren, wird der abschmelzende Schweißdraht im Kontaktrohr des Schweißbrenners kontaktiert und mit einer Schweißspannung und einem Schweißstrom beaufschlagt, sodass vom freien Ende des Schweißdrahts zum Werkstück ein elektrischer Lichtbogen gebildet wird, der das Ende des Schweißdrahts aufschmilzt, sodass es zu einem Materialübergang vom Schweißdraht zum Werkstück kommt. Der sogenannte Stickout oder die freie Drahtelektrodenlänge ist dabei die Länge des Schweißdrahts vom Ende des Kontaktrohr bis zum Ende des Schweißdrahts, an dem der Lichtbogen brennt. Während einer Schweißung werden Schweißzyklen mit einer bestimmten Schweißfrequenz wiederholt und während jedes Schweißzyklus müssen die Schweißparameter, wie die Fördergeschwindigkeit des Schweißdrahts, der Schweißstrom, die Schweißspannung, sowie die Bewegungsgeschwindigkeit des Schweißbrenners in Bezug auf das Werkstück, etc. optimal aufeinander abgestimmt werden, sodass ein stabiler Lichtbogen erzielt werden kann und in der Folge eine möglichst gleichbleibende Qualität der Schweißnaht resultiert. Während jedes Schweißzyklus weisen die Schweißparameter, wie zum Beispiel der Schweißstrom oder die Drahtvorschubgeschwindigkeit bestimmte Mittelwerte, den mittleren Schweißstrom oder die mittlere Drahtvorschubgeschwindigkeit auf.

Bspw. beschreibt die DE 37 31 180 A1 ein Schweißverfahren mit abschmelzendem Schweißdraht.

Aufgrund der Geometrie des zu bearbeitenden Werkstücks ist es in der Regel notwendig während einer Schweißung den Schweißprozess mehrmals zu wechseln und die Schweißparameter an die jeweiligen Gegebenheiten anzupassen. Beispielsweise müssen eine Reihe von Schweißparameter geändert werden, wenn auf eine Überkopfschweißung übergegangen wird, bei der sich die Schweißnaht über dem Schweißbrenner befindet.

Bei einem Wechsel des Schweißprozesses, der mit einer erhöhten mittleren Drahtvorschubgeschwindigkeit (also der über einen Schweißzyklus gemittelten Drahtvorschubgeschwindigkeit) oder einem erhöhten mittleren Schweißstrom (also des über einen Schweißzyklus gemittelten Schweißstroms) einhergeht, besteht die Gefahr einer Überlastung des freien Schweißdrahtendes oder Stickouts, was in der Folge zu Instabilitäten und der Bildung von Schweißspritzern und somit zu einer Minderung der Schweißqualität führen kann.

Insbesondere kann bei einem Schweißprozesswechsel eine unerwünschte Variation der Temperatur im Stickout des Schweißdrahts resultieren und es kann bei einer örtlichen thermischen Überlastung des freien Schweißdrahtendes zu einem unerwünschten schlagartigen Schmelzen eines längeren Teilstücks des freien Schweißdrahtendes und einer schlagartigen Verlängerung der Lichtbogenlänge kommen, wodurch der Schweißprozess gestört und die Schweißqualität verringert wird.

Die Aufgabe der vorliegenden Erfindung besteht darin, ein oben erwähntes Lichtbogenschweißverfahren zu schaffen, bei dem auch bei einem Wechsel des Schweißprozesses mit einer erhöhten mittleren Drahtvorschubgeschwindigkeit während eines Schweißzyklus und bzw. oder einem erhöhten mittleren Schweißstrom während eines Schweißzyklus die Gefahr einer thermischen Überlastung des Stickouts nicht oder nur in einem geringeren Ausmaß gegeben ist. Das Lichtbogenschweißverfahren soll auch bei einem solchen Wechsel des Schweißprozesses stabil ablaufen und mit einer möglichst konstanten Temperaturverteilung im freien Schweißdrahtende und einer möglichst konstanten Lichtbogenlänge und somit einer möglichst konstanten Schweißqualität verbunden sein.

Gelöst wird die erfindungsgemäße Aufgabe dadurch, dass bei einem Wechsel des Schweißprozesses mit einer erhöhten mittleren Drahtvorschubgeschwindigkeit während eines Schweißzyklus und bzw. oder einem erhöhten mittleren Schweißstrom während eines Schweißzyklus eine Absenkphase eingeleitet wird, wobei in der Absenkphase der Schweißstrom über eine vorgegebene Dauer abgesenkt wird. Durch das Einleiten einer solchen Absenkphase mit reduziertem Schweißstrom kann der Überlastung des Stickouts bei einem Wechsel des Schweißprozesses mit einer erhöhten mittleren Drahtvorschubgeschwindigkeit und bzw. oder einem erhöhten mittleren Schweißstrom wirkungsvoll entgegengewirkt werden und ein stabiler Lichtbogen mit einer im Wesentlichen konstanten Lichtbogenlänge erzielt werden. Die jeweiligen Parameter während der Absenkphase werden nach entsprechender Erfahrung in Abhängigkeit der Änderung der Schweißparameter bei einem Wechsel des Schweißprozesses entsprechend ausgewählt und eingestellt. Zusätzlich zur Absenkung des Schweißstroms während der Absenkphase oder auch alternativ dazu könnte auch die Drahtvorschubgeschwindigkeit während der Absenkphase erhöht werden.

Vorzugsweise wird die Absenkphase erst nach dem Verstreichen einer vorgegebenen Verzögerungszeit eingeleitet. Durch die Einhaltung einer Verzögerungszeit wird darauf Rücksicht genommen, dass der vom erhöhten Schweißstrom durchflossene Längenanteil bzw. die einzelnen Teilsegmente des freien Schweißdrahtendes eine gewisse Zeit benötigen, um vom Kontaktpunkt am Kontaktrohr, ab dem der Schweißstrom im freien Schweißdrahtende fließt, bis zum Schweißdrahtende (Abschmelzpunkt) zu gelangen. Diese Verzögerungszeit und die Temperaturerhöhung in den einzelnen Teilsegmenten des Stickout hängt von der momentanen Drahtfördergeschwindigkeit und einer Reihe anderer Schweißparameter (Verlauf und Amplitude des Schweißstroms) ab und kann beispielsweise aus entsprechenden Tabellen oder nach entsprechenden Berechnungsvorschriften in Abhängigkeit des Wechsels des Schweißprozesses ausgewählt und eingestellt werden. Selbstverständlich kann anstelle einer vorgegebenen Verzögerungszeit in äquivalenter Weise auch eine bestimmte Weglänge, welche der Schweißdraht ab dem Wechsel des Schweißprozesses vorwärts bewegt wird, als Vorlage herangezogen werden.

Gemäß einem weiteren Merkmal der Erfindung wird der Schweißstrom in der Absenkphase während der vorgegebenen Dauer auf einen konstanten Schweißstromwert abgesenkt. Dies stellt den einfachsten Fall der Realisierung der Absenkphase dar, indem nach allfälligem Verstreichen einer vorgegebenen Verzögerungszeit der mittlere Schweißstrom über eine vorgegebene Zeitdauer konstant abgesenkt wird und somit einer Überhitzung des freien Schweißdrahtendes bei einem Wechsel des Schweißprozesses entgegengewirkt werden kann.

Alternativ dazu kann der Schweißstrom in der Absenkphase während der vorgegebenen Dauer auch nach einer vorgegebenen Funktion abgesenkt werden, beispielsweise in Form einer Rampe. Durch die Vorgabe eines bestimmtes Verlaufs für den Schweißstrom während der Absenkphase, kann noch besser einer thermischen Überlastung des Stickouts entgegengewirkt werden und eine möglichst konstante Temperaturverteilung im Stickout und somit ein stabiles Schweißverfahren erzielt werden. Die vorgegebene Funktion des Schweißstroms in der Absenkphase kann prinzipiell einen beliebigen Verlauf aufweisen, bspw. einen rampenförmigen Verlauf aber auch einen kurvenförmigen Verlauf oder dergleichen.

Die Dauer der Absenkphase, der Schweißstrom in der Absenkphase und bzw. oder die vorgegebenen Verzögerungszeit kann in Abhängigkeit des verwendeten Schweißdrahts vorgegeben werden. Die Parameter, welche die Absenkphase charakterisieren, können bspw. in tabellarischer Form in Abhängigkeit des Schweißdrahtmaterials und des Schweißdrahtdurchmessers abgelegt und gespeichert werden und bei einem Wechsel des Schweißprozesses automatisch ausgewählt werden.

Vorzugsweise beträgt die Dauer der Absenkphase ein bis 30 Schweißzyklen. Erfahrungsgemäß hat sich herausgestellt, dass bei einer derartigen Dauer der Absenkphase ein stabiler Schweißprozess resultiert.

Der mittlere Schweißstrom wird in der Absenkphase gegenüber dem vorausgegangenen mittleren Schweißstrom während eines Schweißzyklus um vorzugsweise 10% bis 50% abgesenkt. Erfahrungsgemäß ist eine Absenkung des mittleren Schweißstroms in der Absenkphase um 10% bis 50% ausreichend, um wirkungsvoll gegen eine thermische Überlastung des Stickouts einzuwirken.

Die vorgegebene Verzögerungszeit wird idealerweise so eingestellt, dass der Schweißdraht während der Verzögerungszeit um 5mm bis 25mm in Richtung Werkstück bewegt wird. Der angegebene Bereich der Bewegung des Schweißdrahts entspricht üblichen Dimensionen des Abstands zwischen Schweißbrenner und Werkstück und des Stickouts sowie der Lichtbogenlänge. Je nach Schweißdrahtfördergeschwindigkeit wird die Verzögerungszeit entsprechend ausgewählt, um eine entsprechende Vorwärtsbewegung des Schweißdrahts während der Verzögerungszeit zu erreichen.

Gemäß einem weiteren Merkmal wird die freie Länge des Schweißdrahts indirekt ermittelt und es werden die Dauer der Absenkphase, der mittleren Schweißstrom in der Absenkphase und bzw. oder die Verzögerungszeit in Abhängigkeit der ermittelten freie Länge des Schweißdrahts verändert. Durch diese Maßnahme kann die reale freie Länge des Schweißdrahts berücksichtigt werden und somit noch besser gegen eine Überlastung des Stickouts entgegengewirkt werden.

Die freie Schweißdrahtlänge kann indirekt durch eine Messung der Schweißspannung, des Schweißstroms zwischen Schweißdraht und Werkstück und der Drahtvorschubgeschwindigkeit ermittelt werden. Durch Erfassung der Schweißspannung, also der Spannung zwischen Kontaktrohr und Werkstück und des Schweißstroms, also des Stroms zwischen Schweißdraht und Werkstück, sowie der Drahtvorschubgeschwindigkeit kann auf die freie Schweißdrahtlänge rückgeschlossen werden und diese bei der Einstellung der Parameter der erfindungsgemäßen Absenkphase berücksichtigt werden.

Während eines Schweißzyklus können jeweils eine Pulslichtbogenphase mit zumindest einem pulsförmigen Schweißstrom und eine Kurzlichtbogenphase mit einem oder mehreren sich abwechselnden Kurzschlüssen zwischen Schweißdraht und Werkstück und Lichtbogenphasen aufeinanderfolgen. In diesem Fall können die Kurzschlüsse während des Schweißprozesses zum Messen der freien Schweißdrahtlänge über eine Widerstandsmessung ausgenützt werden.

Im Falle eines solchen Schweißprozesses kann die freie Schweißdrahtlänge in der Kurzlichtbogenphase während eines Kurzschlusses zwischen Schweißdraht und Werkstück über eine Widerstandsmessung ermittelt werden. Dabei wird während eines Kurzschlusses, d.h. während der Berührung des Schweißdrahtendes mit dem Werkstück, die Spannung und der Strom am Schweißdrahtende gemessen und daraus der Widerstand ermittelt und aus dem Widerstandswert auf die freie Schweißdrahtlänge rückgeschlossen. Diese Messung der freien Schweißdrahtlänge ist natürlich nur bei kurzschlussbehafteten Schweißverfahren, wie sie oben beschrieben wurden, möglich.

Wenn bei einem neuerlichen Wechsel auf einen Schweißprozess mit einer erhöhten mittleren Drahtvorschubgeschwindigkeit während eines Schweißzyklus und bzw. oder einem erhöhten mittleren Schweißstrom während eines Schweißzyklus die Dauer der Absenkphase gegenüber der vorgegebenen Dauer korrigiert wird, kann eine weitere Verbesserung erzielt werden. Das schlagartige Abschmelzen des Drahtendes bei nicht korrekt angepasster Stromabsenkung kann messtechnisch durch die ebenfalls schlagartig ansteigende Spannung oder den abfallenden Strom, abhängig von der angewandten Strom/Spannungs-Regelung, detektiert werden. Daraus können dann bei nachfolgenden Wechseln des Schweißprozesses die Parameter während der Absenkphase entsprechend angepasst bzw. korrigiert werden. Diese Anpassung kann so lange wiederholt werden, bis kein schlagartiges Abschmelzen des Drahtendes mehr detektiert wird.

Die vorliegende Erfindung wird anhand der beigefügten Zeichnungen näher erläutert. Darin zeigen:
- Fig. 1: eine Prinzipskizze eines Schweißbrenners mit abschmelzendem Schweißdraht;
- Fig. 2: zeitliche Verläufe des Schweißstroms I(t), der Schweißspannung U(t) und der Schweißdrahtgeschwindigkeit v(t) bei einem kurzschlussbehafteten Schweißprozess;
- Fig. 3: den zeitlichen Verlauf des Schweißstroms I(t) bei einem Wechsel des Schweißprozesses bei einer Ausführungsvariante der erfindungsgemäßen Absenkphase;
- Fig. 4: der zum Stromverlauf gemäß Fig. 3 zugehörige Verlauf des Schweißdrahts ab Prozesswechsel;
- Fig. 5: den zeitlichen Verlauf des Schweißstroms I(t) bei einem Wechsel des Schweißprozesses bei einer zweiten Ausführungsvariante der erfindungsgemäßen Absenkphase;
- Fig. 6: der zum Stromverlauf gemäß Fig. 5 zugehörige Verlauf des Schweißdrahts ab Prozesswechsel; und
- Fig. 7: ein Blockschaltbild einer Vorrichtung zur Durchführung des erfindungsgemäßen Verfahrens.

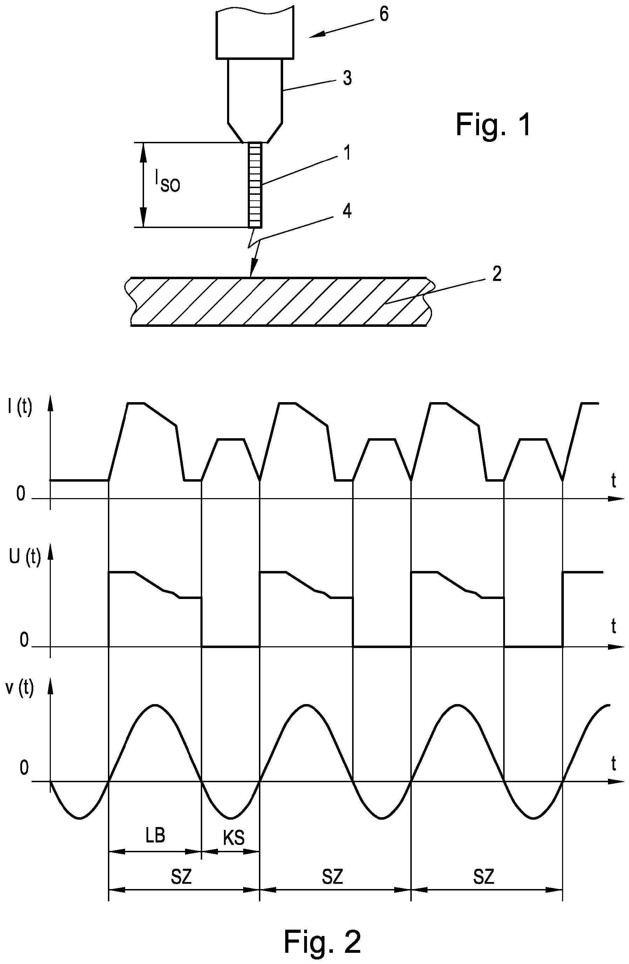

Fig. 1 zeigt eine Prinzipskizze eines Schweißbrenners 6 mit abschmelzendem Schweißdraht 1. Der abschmelzende Schweißdraht 1 wird mit einer entsprechenden Vorschubgeschwindigkeit v(t) durch ein Kontaktrohr 3 des Schweißbrenners 6 befördert und im Kontaktrohr 3 kontaktiert, sodass die vorgegebene Schweißspannung U(t) und der vorgegebene Schweißstrom I(t) dem Schweißdraht 1 eingeprägt werden kann. Bei entsprechender Abstimmung der Schweißparameter resultiert ein Lichtbogen 4 zwischen dem Ende des Schweißdrahts 1 und dem Werkstück 2, der während des Schweißprozesses möglichst konstant bleiben soll. Die freie Schweißdrahtlänge bzw. der sogenannte Stickout bezeichnet die Länge lₛₒ des Schweißdrahts 1 vom Ende des Kontaktrohrs 3 bis zum Beginn des Lichtbogens 4. Die Länge lₛₒ des Stickout soll in einem stabilen Schweißprozess möglichst konstant bleiben. Der Schweißstrom I fließt vom Kontaktpunkt am Kontaktrohr 3 durch den Schweißdraht 1 und trägt zu dessen Erwärmung bei. Die schematisch eingezeichneten Teilsegmente des Schweißdrahts 3 benötigen eine gewisse Zeit, um vom Kontaktpunkt am Kontaktrohr 3 zum Ende des Schweißdrahts 1 zu gelangen. Bei einem stabilen Schweißprozess wird immer nur ein kleines Teilsegment bzw. ein kleiner Längenabschnitt des Schweißdrahts 1 aufgeschmolzen und dieser aufgeschmolzene Teil des Schweißdrahts 1 geht in das Schmelzbad über.

Bei einem Wechsel des Schweißprozesses, der mit einer erhöhten mittleren Drahtvorschubgeschwindigkeit vₘₑₐₙ während eines Schweißzyklus SZ und bzw. oder einem erhöhten mittleren Schweißstrom Iₘₑₐₙ während eines Schweißzyklus SZ einhergeht, besteht die Gefahr, dass Teile des freien Schweißdrahtendes überhitzt werden, wodurch es zu einem schlagartigen Abschmelzen mehrerer Teilsegmente bzw. eines längeren Teilstücks des Schweißdrahts 1 kommt, wodurch auch die Länge des Lichtbogens 4 schlagartig ansteigt und somit der Schweißprozess gestört wird und es sogar zur Bildung von Schweißspritzern kommen kann. Derartige Instabilitäten während des Schweißens führen zu einer Verminderung der Schweißqualität. Jedes Teilsegment des Stickouts mit der Länge lₛₒ wird ab dem Wechsel des Schweißprozesses mit einem erhöhten mittleren Schweißstrom Iₘₑₐₙ unterschiedlich erwärmt, da die Drahtvorschubgeschwindigkeit v nur allmählich nach einer Rampe ansteigen kann, der Schweißstrom I jedoch schlagartig erhöht werden muss, da ansonsten die Tropfenablöse nicht erfolgen kann. Dieses kurzzeitige Ungleichgewicht zwischen Drahtvorschubgeschwindigkeit v und Schweißstrom I verursacht die Temperaturüberhöhung in jenem Bereich (Teilsegmente) der freien Drahtlänge, welche am längsten vom erhöhten Schweißstrom I durchflossen wird. Es sind dies jene Teilsegmente welche sich zum Zeitpunkt der Erhöhung des Schweißstroms I und/oder des Drahtvorschubs v am Kontakt- bzw. Stromübergangspunkt im Kontaktrohr 3 befinden. Wenn der Schweißstrom I nicht geändert wird, schmilzt ein Teil dieser Segmente des Schweißdrahts 1 schlagartig, wenn diese im vorderen Bereich des freien Drahtendes ankommen, sich also in der unmittelbaren Nähe des Ansatzes des Lichbogens 4 befinden. Je größer die Länge lₛₒ des freien Drahtendes, umso länger werden die Teilsegmente vom erhöhten Schweißstrom I durchflossen und deren Temperatur erhöht, sodass es ab einem gewissen freien Drahtende (Stickout) zu diesem schlagartigen Abschmelzen eines längeren Teilstückes des Drahtendes kommen kann, wenn keine Gegenmaßnahmen durchgeführt werden.

In Fig. 2 sind die zeitlichen Verläufe des Schweißstroms I(t), der Schweißspannung U(t) und der Schweißdrahtgeschwindigkeit v(t) bei einem kurzschlussbehafteten Schweißprozess dargestellt. Der Schweißprozess besteht aus sich mit der Schweißfrequenz wiederkehrenden Schweißzyklen SZ, in denen die Schweißparameter einem bestimmten zeitlichen Verlauf folgen. Als Verlauf des Schweißstroms I(t) ist beispielhaft ein Verlauf dargestellt, bei dem während der Lichtbogenphase LB ein Stromimpuls angelegt wird und während der Kurzschlussphase KS ein weiterer Stromimpuls mit geringerer Amplitude als während der Lichtbogenphase LB. Die Schweißspannung U(t) weist einen während der Lichtbogenphase LB im Wesentlichen konstanten Verlauf auf und bricht während der Kurzschlussphase KS entsprechend zusammen. Die Drahtvorschubgeschwindigkeit v(t) weist während der Lichtbogenphase LB einen im Wesentlichen positiven Verlauf, d.h. eine Bewegung in Vorwärtsrichtung und während der Kurzschlussphase eine Rückwärtsbewegung, d.h. vom Werkstück 2 weg, auf. Im Mittel findet eine gewisse mittlere Drahtvorschubgeschwindigkeit vₘₑₐₙ während eines Schweißzyklus SZ in Richtung des Werkstücks 2 statt, da es während des Schweißprozesses zu einem Aufschmelzen des Schweißdrahts 1 und einem Materialübergang zum Werkstück 2 kommt. Natürlich kann der Schweißprozess auch eine Drahtvorschubgeschwindigkeit nur in Richtung zum Werkstück ohne Rückwärtsbewegung beinhalten.

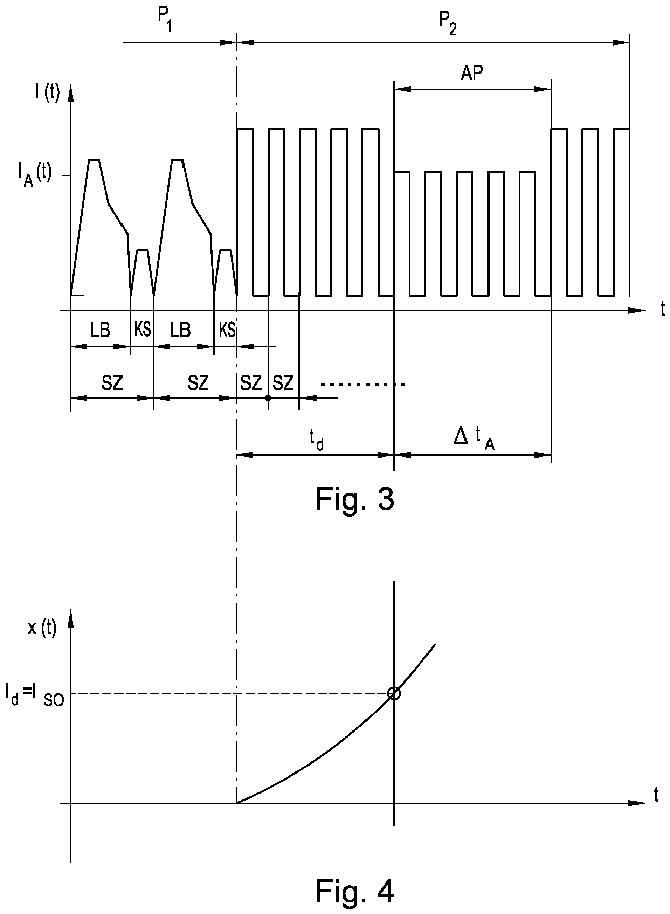

Fig. 3 zeigt den zeitlichen Verlauf des Schweißstroms I(t) bei einem Wechsel eines Schweißprozesses P₁ auf einen Schweißprozess P₂ bei einer Ausführungsvariante der erfindungsgemäßen Absenkphase AP. Bspw. handelt es sich bei dem Schweißprozess P₁ um einen kurzschlussbehafteten Schweißprozess während der Schweißprozess P₂ ein Impulsschweißprozess ist. Es könnte sich aber auch um zwei Pulsprozesse unterschiedlicher Leistung handeln. Zum Zeitpunkt des Wechsels vom Schweißprozess P₁ auf den Schweißprozess P₂ wird ein Zeitglied gestartet und nach Ablauf einer vorgegebenen Verzögerungszeit t_{d} die erfindungsgemäße Absenkphase AP eingeleitet. Wie bereits oben erwähnt, kann anstelle der Einstellung einer Verzögerungszeit t_{d} auch eine bestimmte Weglänge, welche der Schweißdraht 1 ab dem Wechsel des Schweißprozesses P₁ auf den Schweißprozess P₂ bewegt wird, eingestellt werden. Während einer Dauer Δt_{A} der Absenkphase AP wird der mittlere Schweißstrom I_{mean,A} während der Absenkphase AP gegenüber dem mittleren Schweißstrom während des zweiten Schweißprozesses P₂ abgesenkt. Im dargestellten Beispiel gemäß Fig. 3 erfolgt eine Absenkung auf einen konstanten Stromwert I_{mean,A}. Nach Ablauf der Dauer Δt_{A} der Absenkphase AP wird der Schweißprozess P₂ mit den vor der Absenkphase AP gültigen Schweißparametern fortgesetzt.

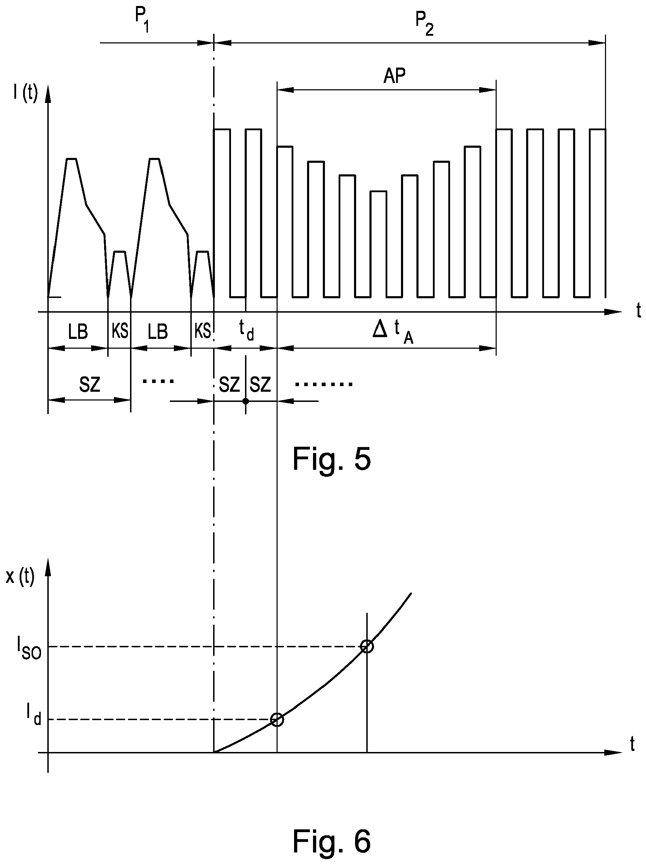

Fig. 4 zeigt den zum Stromverlauf gemäß Fig. 3 zugehörigen Verlauf des Schweißdrahts 1 ab Prozesswechsel. Die Wegstrecke des freien Schweißdrahtendes x(t) in Abhängigkeit der Zeit t verläuft bis zur Stickoutlänge lₛₒ worauf die Absenkphase AP eingeleitet wird. Die Verzögerungszeit t_{d} bis zur Einleitung der Absenkphase AP wird also so eingestellt bzw. ausgewählt, dass der Schweißdraht 1 ab Beginn des Wechsels des Schweißprozesses P₁ auf den Schweißprozess P₂ während dieser Zeit einen Vorschub entsprechend der gewünschten Stickoutlänge lₛₒ vollzieht. Die Länge l_{d}, welche der Schweißdraht 1 während der Verzögerungszeit t_{d} vorwärts bewegt wird, ist in diesem Fall gleich der Stickoutlänge lₛₒ. Dann wird die Absenkphase AP eingeleitet und dadurch eine Überhitzung des freien Schweißdrahtendes wirkungsvoll verhindert. Die Verzögerungszeit t_{d} kann aber auch kürzer oder länger als jene Zeit, die der Schweißdraht 1 benötigt, bis die Stickoutlänge lₛₒ erreicht wurde, gewählt werden (siehe BVeispiel gemäß den Figuren 5 und 6).

In Fig. 5 ist der zeitliche Verlauf des Schweißstroms I(t) bei einem Wechsel des Schweißprozesses bei einer zweiten Ausführungsvariante der erfindungsgemäßen Absenkphase AP dargestellt. Im Gegensatz zur Variante gemäß den Fig. 3 und 4 wird hier der mittlere Schweißstrom während der Absenkphase AP in Form einer vorgegebenen Funktion, hier in Form einer Rampe, reduziert und wieder erhöht. Dadurch kann für bestimmte Gegebenheiten eine weitere Verbesserung der Konstanthaltung der Temperatur im freien Schweißdrahtende erzielt werden und somit ein stabilerer Schweißverlauf auch bei einem Wechsel eines Schweißprozess P₁ auf einen anderen Schweißprozess P₂ mit einer erhöhten mittleren Drahtvorschubgeschwindigkeit v(t) während eines Schweißzyklus SZ und bzw. oder einem erhöhten mittleren Schweißstrom Iₘₑₐₙ(t) während eines Schweißzyklus SZ.

Fig. 6 zeigt den zum Stromverlauf gemäß Fig. 5 zugehörigen Verlauf des Schweißdrahts 1 ab Prozesswechsel. Hier wird die Verzögerungszeit t_{d} bis zur Einleitung der Absenkphase AP kleiner als beim Ausführungsbeispiel gemäß Fig. 4 gewählt. Der Schweißdraht 1 hat sich ab dem Zeitpunkt des Wechsels des Schweißprozesses P₁ auf den Schweißprozess P₂ während dieser Verzögerungszeit t_{d} eine Länge l_{d} vorwärts bewegt, die kürzer als die Stickoutlänge lₛₒ ist.

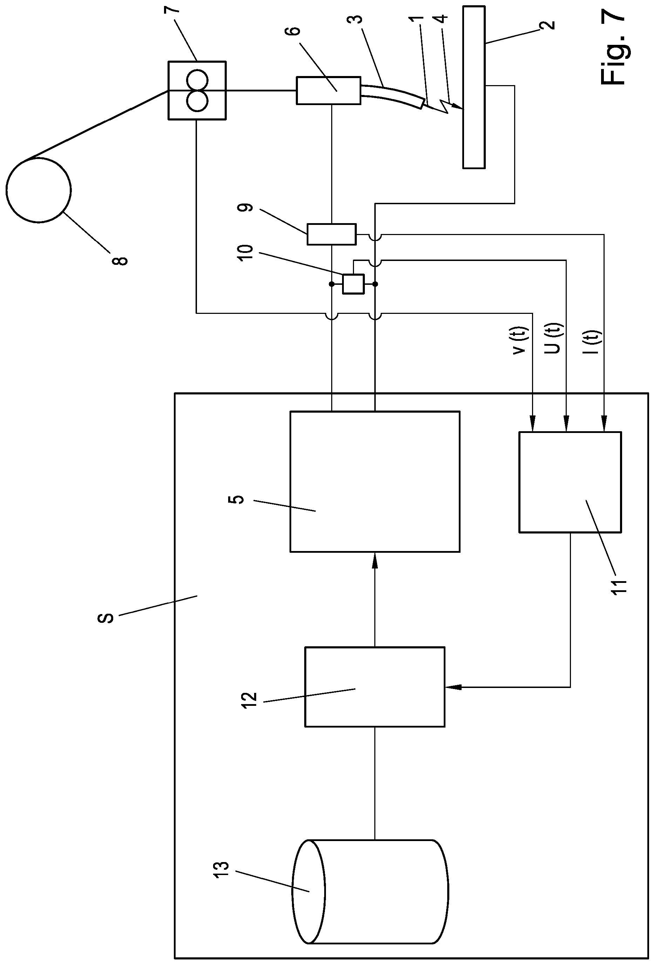

Schließlich zeigt Fig. 7 das Blockschaltbild einer Vorrichtung zur Durchführung des erfindungsgemäßen Verfahrens. Der Schweißbrenner 6 mit dem Kontaktrohr 3 und Schweißdraht 1 wird mit der Schweißstromquelle 5 verbunden und mit einem Drahtvorschubgerät 7, welches den Schweißdraht 1 von einer Drahtrolle 8 mit einer entsprechenden Geschwindigkeit v(t) durch das Kontaktrohr 3 des Schweißbrenners 6 bewegt. Das zu bearbeitende Werkstück 2 wird mit der Schweißstromquelle 5 verbunden, wodurch bei Einprägung eines entsprechenden Schweißstroms I(t) und einer entsprechenden Schweißspannung U(t) über das Kontaktrohr 3 an den Schweißdraht 1 ein Lichtbogen 4 gebildet wird. Eine Steuereinrichtung 12 steuert die Vielzahl an Schweißparametern während des Schweißverfahrens.

Erfindungsgemäß werden in einer Verarbeitungseinrichtung 11 bestimmte Parameter des Schweißverfahrens erfasst und entsprechend verarbeitet. Zu diesen Parametern gehört die Drahtvorschubgeschwindigkeit v(t), welche vom Drahtvorschubgerät 7 an die Verarbeitungseinrichtung 11 geliefert wird, der Schweißstrom I(t), der von einer entsprechenden Einrichtung 9 zur Messung des Schweißstroms I(t) ermittelt und an die Verarbeitungseinrichtung 11 geführt wird und die Schweißspannung U(t), welche mit einer entsprechenden Einrichtung 10 zur Messung der Schweißspannung U(t) ermittelt wird.

Bei einem Wechsel eines Schweißprozesses Pᵢ werden nun diese Parameter in der Verarbeitungseinrichtung 11 entsprechend verarbeitet und zur Steuerung der Steuereinrichtung 12 herangezogen. Die Einstellungen für die erfindungsgemäße Absenkphase AP werden bspw. aus einer Datenbank 13 entsprechend den von der Schweißstromquelle 5 eingestellten Schweißparametern und den gemessenen Parametern ausgewählt. Durch das Einführen der Absenkphase AP mit der Verzögerungszeit t_{d}, Dauer Δt_{A} und dem abgesenkten mittleren Schweißstrom I_{mean,A} während der Absenkphase AP, kann einer Überhitzung des Stickouts bei einem Wechsel des Schweißprozesses Pᵢ wirkungsvoll entgegengewirkt werden und ein stabiler Schweißprozess und eine optimale Schweißqualität erzielt werden.

## Patentansprüche

1. Lichtbogenschweißverfahren mit einem abschmelzenden Schweißdraht (1), wobei während eines Schweißprozesses in aufeinanderfolgenden Schweißzyklen (SZ) der Schweißdraht (1) mit einem bestimmten Schweißstrom (I(t)) beaufschlagt und mit einer bestimmten Drahtvorschubgeschwindigkeit (v(t)) in Richtung eines zu bearbeitenden Werkstücks (2) bewegt wird, **dadurch gekennzeichnet, dass** bei einem Wechsel des Schweißprozesses mit einer erhöhten mittleren Drahtvorschubgeschwindigkeit (vₘₑₐₙ) während eines Schweißzyklus (SZ) und bzw. oder einem erhöhten mittleren Schweißstrom (Iₘₑₐₙ) während eines Schweißzyklus (SZ) eine Absenkphase (AP) eingeleitet wird, wobei in der Absenkphase (AP) der Schweißstrom (I_{A}(t)) über eine vorgegebene Dauer (Δt_{A}) abgesenkt wird.

2. Lichtbogenschweißverfahren nach Anspruch 1, **dadurch gekennzeichnet, dass** die Absenkphase (AP) nach dem Verstreichen einer vorgegebenen Verzögerungszeit (t_{d}) eingeleitet wird.

3. Lichtbogenschweißverfahren nach Anspruch 1 oder 2, **dadurch gekennzeichnet, dass** der Schweißstrom (I_{A}(t)) in der Absenkphase (AP) während der vorgegebenen Dauer (Δt_{A}) auf einen konstanten Schweißstromwert (I_{mean,A}) abgesenkt wird.

4. Lichtbogenschweißverfahren nach Anspruch 1 oder 2, **dadurch gekennzeichnet, dass** der Schweißstrom (I_{A}(t)) in der Absenkphase (AP) während der vorgegebenen Dauer (Δt_{A}) nach einer vorgegebenen Funktion abgesenkt wird.

5. Lichtbogenschweißverfahren nach einem der Ansprüche 1 bis 4, **dadurch gekennzeichnet, dass** die Dauer (Δt_{A}) der Absenkphase (AP), der Schweißstrom (I_{A}(t)) in der Absenkphase (AP) und bzw. oder die vorgegebenen Verzögerungszeit (t_{d}) in Abhängigkeit des verwendeten Schweißdrahts (1) vorgegeben werden.

6. Lichtbogenschweißverfahren nach einem der Ansprüche 1 bis 5, **dadurch gekennzeichnet, dass** die Dauer (Δt_{A}) der Absenkphase (AP) ein bis 30 Schweißzyklen (SZ) beträgt.

7. Lichtbogenschweißverfahren nach einem der Ansprüche 1 bis 6, **dadurch gekennzeichnet, dass** der mittlere Schweißstrom (I_{mean,A}) in der Absenkphase (AP) gegenüber dem vorausgegangenen mittleren Schweißstrom (Iₘₑₐₙ) während eines Schweißzyklus (SZ) um 10% bis 50% abgesenkt wird.

8. Lichtbogenschweißverfahren nach einem der Ansprüche 2 bis 7, **dadurch gekennzeichnet, dass** die vorgegebene Verzögerungszeit (t_{d}) so eingestellt wird, dass der Schweißdraht (1) während der Verzögerungszeit (t_{d}) um 5mm bis 25mm in Richtung Werkstück (2) bewegt wird.

9. Lichtbogenschweißverfahren nach einem der Ansprüche 1 bis 8, **dadurch gekennzeichnet, dass** die freie Länge (lₛₒ) des Schweißdrahts (1) indirekt ermittelt wird und die Dauer (Δt_{A}) der Absenkphase (AP), der mittleren Schweißstrom (I_{A}(t)) in der Absenkphase (AP) und bzw. oder die Verzögerungszeit (t_{d}) in Abhängigkeit der ermittelten freie Länge (lₛₒ) des Schweißdrahts (1) verändert werden.

10. Lichtbogenschweißverfahren nach Anspruch 9, **dadurch gekennzeichnet, dass** die freie Schweißdrahtlänge (lₛₒ) indirekt durch eine Messung der Schweißspannung (U(t)), des Schweißstroms (I(t)) zwischen Schweißdraht (1) und Werkstück (2) und der Drahtvorschubgeschwindigkeit (v(t)) ermittelt wird.

11. Lichtbogenschweißverfahren nach Anspruch 9 oder 10, **dadurch gekennzeichnet, dass** während eines Schweißzyklus (SZ) jeweils eine Pulslichtbogenphase (LB) mit zumindest einem pulsförmigen Schweißstrom (I(t)) und eine Kurzlichtbogenphase mit einem oder mehreren sich abwechselnden Kurzschlüssen zwischen Schweißdraht (1) und Werkstück (2) und Lichtbogenphasen aufeinanderfolgen.

12. Lichtbogenschweißverfahren nach Anspruch 11, **dadurch gekennzeichnet, dass** die freie Schweißdrahtlänge (lₛₒ) in der Kurzlichtbogenphase während eines Kurzschlusses zwischen Schweißdraht (1) und Werkstück (2) über eine Widerstandsmessung ermittelt wird.

13. Lichtbogenschweißverfahren nach einem der Ansprüche 1 bis 12, **dadurch gekennzeichnet, dass** bei einem neuerlichen Wechsel auf einen Schweißprozess mit einer erhöhten mittleren Drahtvorschubgeschwindigkeit (vₘₑₐₙ) während eines Schweißzyklus (SZ) und bzw. oder einem erhöhten mittleren Schweißstrom (Iₘₑₐₙ) während eines Schweißzyklus (SZ) die Dauer (Δt_{A}) der Absenkphase (AP) gegenüber der vorgegebenen Dauer (Δt_{A}) korrigiert wird.
